# EUROPEAN PATENT APPLICATION

(11) **EP 4 615 020 A1**
(43) Date of publication of application: **10.09.2025**
(21) Application number: 22963984.4
(22) Date of filing: 03.11.2022
(51) Int. Cl.: H04W 8/06, H04W 8/08

(54) **DATA TRANSMISSION METHOD AND DEVICE IN ROAMING SCENARIO AND READABLE STORAGE MEDIUM**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Dehns Germany Partnerschaft mbB
(86) International application number: PCT/CN2022/129684
(87) International publication number: WO 2024/092674

(57) **Abstract**

The present disclosure provides a data transmission method and device in a roaming scenario and a readable storage medium. The method comprises: sending a second request message to a visited central network function (V-Central NF) according to a first request message of a home network function H-Consumer NF, wherein the second request message is used for requesting setting data; after passing user consent-based verification by a visited first network element, receiving a first message sent by the V-central NF and used for indicating the setting data; and sending, to the H-Consumer NF, a second message used for indicating the setting data. In embodiments of the present disclosure, when an H-Consumer NF requests setting data in a roaming scenario by means of an H-NWDAF, a VPLMN side can perform verification on the basis of user consent, and after the verification, the H-NWDAF sends related data to the H-Consumer NF; thus, data exchange between the VPLMN and an HPLMN can be implemented, and the security of user data can also be effectively protected on the basis of user consent.

## Description

### TECHNICAL FIELD

The present disclosure relates to a field of wireless communication technology, and more particularly, to a method, an apparatus, and a readable storage medium for transmitting data in a roaming scenario.

### BACKGROUND

The 3rd Generation Partnership Project (3GPP) indicates that, in a roaming scenario, data exchange is involved between a Home Public Land Mobile Network (HPLMN) and a Visited Public Land Mobile Network (VPLMN). In such a scenario, user data may be exchanged between different entities (the HPLMN and the VPLMN), which may pose a risk of user privacy leakage.

### SUMMARY

The present disclosure provides a method, an apparatus, and a readable storage medium for transmitting data in a roaming scenario.

In a first aspect, a method for receiving data in a roaming scenario is provided, performed by a Network Data Analytics Function in a Home Public Land Mobile Network H-NWDAF, including:
sending, according to a first request message of a Consumer Network Function in a Home Public Land Mobile Network H-Consumer NF, a second request message to a Central Network Function in a Visited Public Land Mobile Network V-Central NF, where the second request message is configured to request setting data;
receiving, after a first network element of a Visited Public Land Mobile Network checks that user consent is granted, a first message, configured to indicate the setting data, sent by the V-Central NF; and
sending a second message configured to indicate the setting data to the H-Consumer NF.

In the method of the present disclosure, in a roaming scenario, the H-Consumer NF may request the setting data from the V-Central NF via the H-NWDAF, the VPLMN side may perform the checking based on the user consent and, after the checking, send the relevant data to the H-Consumer NF via the H-NWDAF, which not only enables data exchange between the VPLMN and the HPLMN, but also effectively protects the security of the user data based on the user consent.

In some possible embodiments, the method further includes:
receiving the first request message sent by the H-Consumer NF, where the first request message includes at least one of: a UE identifier corresponding to the setting data, or a data processor identifier of the setting data.

In some possible embodiments, sending the second request message to the Central Network Function in the Visited Public Land Mobile Network V-Central NF according to the first request message of the Consumer Network Function in the Home Public Land Mobile Network H-Consumer NF includes:
determining, after receiving the first request message, whether a home public land mobile network HPLMN is allowed to acquire data from a visited public land mobile network VPLMN according to a local operator policy and/or a regulatory policy of the HPLMN;
sending, when the HPLMN is allowed to acquire the data from the VPLMN, the second request message to the V-Central NF.

In some possible embodiments, the method further includes:
sending, when receiving a first notification message sent by the V-Central NF, a second notification message to the H-Consumer NF, where the first notification message is configured to notify that the User Consent is modified or revoked, and the second notification message is configured to notify the H-Consumer NF to stop processing the setting data and delete the setting data acquired.

In some possible embodiments, the first network element of the Visited Public Land Mobile Network is one of:
the V-Central NF;
a Network Data Analytics Function in a Visited Public Land Mobile Network V-NWDAF; or
a Network Function in a Visited Public Land Mobile Network V-NF.

In some possible embodiments, the setting data includes user data or analytics information.

In a second aspect, a method for sending data in a roaming scenario is provided, performed by a Central Network Function in a Visited Public Land Mobile Network V-Central NF, including:
receiving a second request message sent by an H-NWDAF, where the second request message is configured to request setting data; and
sending, after a first network element of a Visited Public Land Mobile Network checks that user consent is granted, a first message configured to indicate the setting data to the H-NWDAF.

In some possible embodiments, sending the first message configured to indicate the setting data to the H-NWDAF includes:
sending, when the setting data is analytics information, a first subscription message to a V-NWDAF;
receiving a third message, configured to indicate the analytics information, sent by the V-NWDAF; and
sending the first message configured to indicate the analytics information to the H-NWDAF.

In some possible embodiments, sending the first message configured to indicate the setting data to the H-NWDAF includes:
sending, when the setting data is user data, a second subscription message to a V-NF;
receiving a fourth message, configured to indicate the user data, sent by the V-NF; and
sending the first message configured to indicate the user data to the H-NWDAF.

In some possible embodiments, the first network element is one of:
the V-Central NF;
a V-NWDAF; or
a V-NF.

In some possible embodiments, when the first network element is the V-Central NF, the method further includes:
performing the checking based on the user consent.

In some possible embodiments, performing the checking based on the user consent includes:
determining, according the user consent and a local operator policy and/or a regulatory policy of the VPLMN, whether provision of the setting data to an HPLMN is allowed; and
determining, when the provision of the setting data to the HPLMN is allowed, that user consent is granted.

In some possible embodiments, the method further includes:
sending, when the user consent is modified or revoked, a first notification message to the H-NWDAF.

In some possible embodiments, the method further includes:
sending, when the setting data is analytics information and the user consent is modified or revoked, a first notification message to a V-NWDAF; or
sending, when the setting data is user data and the user consent is modified or revoked, a first notification message to a V-NF.

In some possible embodiments, the V-Central NF is one of:
a V-NWDAF;
a data collection coordination function DCCF;
a network exposure function NEF; or
a gateway exposure function GEF.

In a third aspect, a method for sending data in a roaming scenario is provided, performed by a Network Data Analytics Function in a Visited Public Land Mobile Network V-NWDAF, including:
receiving a first subscription message sent by a V-Central NF; and
sending a third message configured to indicate analytics information to the V-Central NF.

In some possible embodiments, the method further includes:
performing, in response to the V-NWDAF serving as a first network element, checking based on user consent.

In some possible embodiments, performing the checking based on the user consent includes:
determining, according to the user consent and a local operator policy and/or a regulatory policy of a VPLMN, whether provision of the analytics information to an HPLMN is allowed; and
determining, when the provision of the analytics information to the HPLMN is allowed, that the user consent is granted.

In some possible embodiments, the method further includes:
stopping, when receiving a first notification message sent by the V-Central NF, generating the analysis message, where the first notification message is configured to notify user consent is modified or revoked.

In a fourth aspect, a method for sending data in a roaming scenario is provided, performed by a Network Function in a Visited Public Land Mobile Network V-NF, including:
receiving a second subscription message sent by a V-Central NF; and
sending a fourth message configured to indicate user data to the V-Central NF.

In some possible embodiments, the method further includes:
performing, in response to the V-NF serving as a first network element, checking based on user consent.

In some possible embodiments, performing the checking based on the user consent includes:
determining, according the user consent and a local operator policy and/or a regulatory policy of a VPLMN, whether provision of the user data to an HPLMN is allowed; and
determining, when the provision of the user data to the HPLMN is allowed, that user consent is granted.

In some possible embodiments, the method further includes:
stopping, when receiving a first notification message sent by the V-Central NF, generating the user data, where the first notification message is configured to notify user consent is modified or revoked.

In a fifth aspect, an apparatus for receiving data in a roaming scenario is provided, The apparatus may be used to perform the steps executed by the H-NWDAF in the first aspect or in any possible design of the first aspect. The functions in the above methods may be implemented by means of a hardware structure, software modules, or a combination of hardware structure and software modules.

When the communication device of the first aspect is implemented by software modules, the communication device may include a transceiver module.

The transceiver module is configured to send a second request message to a Central Network Function in a Visited Public Land Mobile Network V-Central NF according to a first request message of a Consumer Network Function in a Home Public Land Mobile Network H-Consumer NF, where the second request message is configured to request setting data;
where the transceiver module is further configured to receive a first message configured to indicate the setting data sent by the V-Central NF after a first network element of a Visited Public Land Mobile Network checks that user consent is granted; and
the transceiver module is further configured to send a second message configured to indicate the setting data to the H-Consumer NF.

In a sixth aspect, an apparatus apparatus for sending data in a roaming scenario is provided. The apparatus may be used to perform the steps executed by the V-Central NF in the second aspect or in any possible design of the second aspect. The functions in the above methods may be implemented by means of a hardware structure, software modules, or a combination of hardware structure and software modules.

When the communication device of the second aspect is implemented by software modules, the communication device may include a transceiver module.

The transceiver module is configured to receive a second request message sent by an H-NWDAF, where the second request message is configured to request setting data;
where the transceiver module is further configured to send a first message configured to indicate the setting data to the H-NWDAF after a first network element of a Visited Public Land Mobile Network checks that user consent is granted.

In a seventh aspect, an apparatus for sending data in a roaming scenario is provided, the apparatus may be used to perform the steps executed by the V-NWDAF in the third aspect or in any possible design of the third aspect. The functions in the above methods may be implemented by means of a hardware structure, software modules, or a combination of hardware structure and software modules.

When the communication device of the third aspect is implemented by software modules, the communication device may include a transceiver module.

The transceiver module is configured to receive a first subscription message sent by a V-Central NF;
the transceiver module is further configured to send a third message configured to indicate analytics information to the V-Central NF.

In an eighth aspect, an apparatus for sending data in a roaming scenario is provided. The apparatus may be used to perform the steps executed by the V-NF in the fourth aspect or in any possible design of the fourth aspect. The functions in the above methods may be implemented by means of a hardware structure, software modules, or a combination of hardware structure and software modules.

When the communication device of the fourth aspect is implemented by software modules, the communication device may include a transceiver module.

The transceiver module is configured to receive a second subscription message sent by a V-Central NF;
the transceiver module is further configured to send a fourth message configured to indicate user data to the V-Central NF.

In a ninth aspect, a communication device is provided, including a processor and a memory; the memory is configured to store a computer program; the processor is configured to execute the computer program to implement any possible design of the first aspect, second aspect, third aspect, or fourth aspect.

In a tenth aspect, a computer-readable storage medium is provided, including a processor and a memory; the computer-readable storage medium stores instructions, which, when executed on a computer, cause the computer to perform any possible design of the first aspect, second aspect, third aspect, or fourth aspect.

It should be understood that the foregoing general description and the following detailed description are merely exemplary and explanatory, and are not intended to limit the present disclosure.

### BRIEF DESCRIPTION OF THE DRAWINGS

The accompanying drawings described herein are provided for a further understanding of embodiments of the present disclosure, and constitute a part of the present application. The illustrative embodiments and the descriptions thereof are provided to explain embodiments of the present disclosure and are not intended to improperly limit the present disclosure, in the drawings:
the accompanying drawings are incorporated into and constitute a part of this specification, illustrating the embodiments consistent with the present disclosure, and the drawings are used together with the specification to explain principles of embodiments of the present disclosure.
FIG. 1 is a schematic diagram of a communication system architecture provided in an embodiment of the present disclosure ;
FIG. 2 is a flowchart of a method for transmitting data in a roaming scenario according to an exemplary embodiment of the present disclosure;
FIG. 3 is a flowchart of a method for transmitting data in a roaming scenario according to another exemplary embodiment of the present disclosure;
FIG. 4 is a flowchart of a method for transmitting data in a roaming scenario according to another exemplary embodiment of the present disclosure;
FIG. 5 is a flowchart of a method for receiving data in a roaming scenario according to an exemplary embodiment of the present disclosure;
FIG. 6 is a flowchart of another method for receiving data in a roaming scenario according to an exemplary embodiment of the present disclosure;
FIG. 7 is a flowchart of a method for sending data in a roaming scenario according to an exemplary embodiment of the present disclosure;
FIG. 8 is a flowchart of another method for sending data in a roaming scenario according to an exemplary embodiment of the present disclosure;
FIG. 9 is a flowchart of a method for sending data in a roaming scenario according to another exemplary embodiment of the present disclosure;
FIG. 10 is a flowchart of a method for sending data in a roaming scenario according to another exemplary embodiment of the present disclosure;
FIG. 11 is a structural diagram of an apparatus for receiving data in a roaming scenario according to an exemplary embodiment of the present disclosure;
FIG. 12 is a structural diagram of an apparatus for sending data in a roaming scenario according to an exemplary embodiment of the present disclosure;
FIG. 13 is a structural diagram of an apparatus for sending data in a roaming scenario according to another exemplary embodiment of the present disclosure;
FIG. 14 is a structural diagram of an apparatus for sending data in a roaming scenario according to another exemplary embodiment disclosed herein.

### DETAILED DESCRIPTION

The embodiments of the present disclosure are further described below in conjunction with the drawings and specific embodiments.

The exemplary embodiments are described in detail herein, with the examples illustrated in the drawings. In the following description with reference to the drawings, unless otherwise indicated, the same reference numerals in different drawings refer to the same or similar elements. The embodiments described in the following exemplary embodiments do not represent all embodiments consistent with the present disclosure. Instead, they are merely examples of apparatus and methods consistent with some aspects of the present disclosure as detailed in the appended claims.

The terms used in the embodiments of the present disclosure are merely for the purpose of describing specific embodiments and are not intended to limit the present disclosure. The singular forms "a," "an," and "the" as used in the embodiments of the present disclosure and the appended claims are intended to also include the plural forms, unless the context clearly indicates otherwise. Furthermore, the term "and/or" as used herein refers to and includes any and all possible combinations of one or more of the associated listed items.

It should be understood that, although the embodiments of the present disclosure may use the terms "first," "second," "third," etc., to describe various pieces of information, such terms should not be construed as limiting. These terms are merely used to distinguish between pieces of information of the same type. For example, without departing from the scope of the present disclosure, a first piece of information may also be referred to as a second piece of information, and similarly, a second piece of information may be referred to as a first piece of information. Depending on the context, the words "if" and "in case that" used herein may be interpreted as "when", "upon" , or "in response to determining that".

The embodiments of the present disclosure will be described in detail below with reference to examples thereof as illustrated in the accompanying drawings, throughout which same or similar elements are denoted by same or similar reference numerals. The embodiments described below with reference to the drawings are illustrative only, and are intended to explain, rather than limiting, the present disclosure.

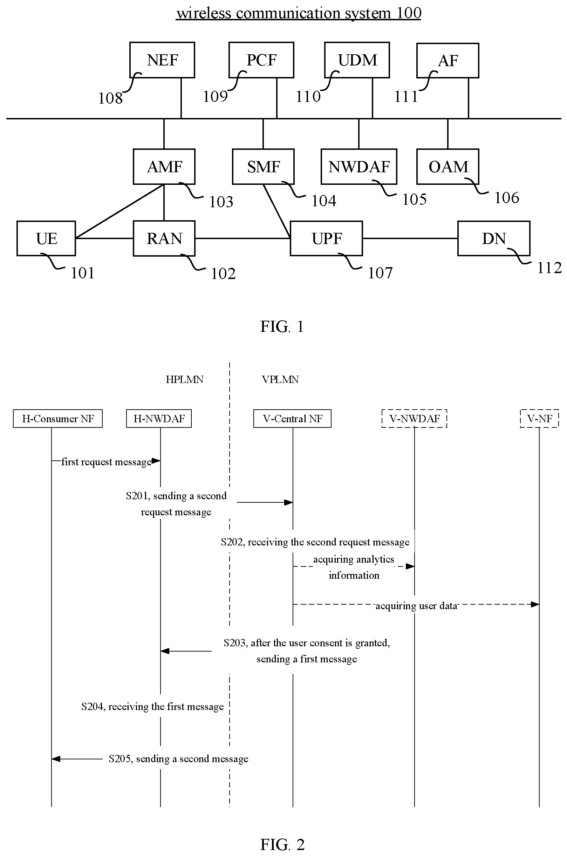

FIG. 1 schematically illustrates a wireless communication system 100, which represents a network architecture applicable to embodiments of the present disclosure.

As an example, the network architecture is applied to 5th-Generation (5G) mobile communication technology. As shown in FIG. 1, the wireless communication system 100 includes: User Equipment/device (UE) 101, a Radio Access Network (RAN) 102, and a core network (5GC).

The UE 101 may be a terminal, an access terminal, a terminal unit, a terminal station, a mobile station (MS), a remote station, a remote terminal, a mobile terminal, a wireless communication device, a terminal proxy, or a terminal device. The UE 101 may have wireless transceiving capability and be capable of communicating (e.g., wirelessly) with one or more RAN 102 devices of one or more communication systems, and of receiving network services provided by the RAN 102 devices. The UE 101 may be a cellular phone, a cordless phone, a Session Initiation Protocol (SIP) phone, a Wireless Local Loop (WLL) station, a personal digital assistant (PDA), a handheld device with wireless communication function, a computing device, another processing device connected to a wireless modem, a vehicle-mounted device, a wearable device, a terminal device in a future 5G network, or a terminal device in an evolved PLMN network in the future, and the like.

The RAN 102 refers to a device providing network access function. Specifically, the RAN 102 may include a base station (BS), or a base station together with a radio resource management device for controlling the base station. The RAN 102 may further include a relay station (relay device), an access point, a base station in a future 5G network, a base station in an evolved PLMN network, or an NR base station. The network device 102 may also be a wearable device or a vehicle-mounted device. The RAN 102 may also be a communication chip with a communication module. For example, the RAN 102 includes but is not limited to: a next-generation Node B (gNodeB or gNB) in 5G, an evolved Node B (eNB) in an LTE system, a Radio Network Controller (RNC), a Node B (NB) in a WCDMA system, a radio controller in a CRAN system, a Base Station Controller (BSC), a Base Transceiver Station (BTS) in a GSM or CDMA system, a home base station (e.g., a home evolved NodeB or home node B, HNB), a Baseband Unit (BBU), a Transmitting and Receiving Point (TRP), a Transmitting Point (TP), or a Mobile Switching Center.

In the wireless communication system 100, the UE 101 may access a Data Network (DN) 112 through the RAN 102 to acquire services. The UE exchanges information with the RAN 102 via an air interface, and the RAN 102 is responsible for scheduling the air interface resources and managing the air interface connections for the UE 101. The DN 112 provides a service network for data transmission to a user, such as an operator service, Internet access, and a third-party service.

The core network part may include following network elements: Access and Mobility Management Function (AMF) 103, Session Management Function (SMF) 104, Network Data Analytics Function (NWDAF) 105, Operation Administration and Maintenance (OAM) 106, User Plane Function (UPF) 107, Network Exposure Function (NEF) 108, Policy and Charging Function (PCF) 109, Unified Data Management (UDM) 110, and Application Function (AF) 111, and the like.

The AMF 103 is a control plane network element of the core network, which is used for registration management, connection management, mobility management, and user reachability management of the user, and participates in control plane management functions such as authentication and authorization related management, and the like.

The SMF 104 is a control plane network element of the core network, mainly responsible for session management related operations, including establishing, modifying, releasing sessions, and the like. The NWDAF 105 is a network element introduced in 5G mainly used for various network data analytics.

The NWDAF 105 may collect network operation data from core network control plane Network Functions (NFs), statistical data related to the UE 101 and the network from the OAM 106, and application data from the AF 111.

The NWDAF 105 may feedback an analysis result to the NF, OAM 106, or AF 111 within a certain analysis delay.

The OAM 106 is mainly responsible for the operation, management, and maintenance of a network operation of an operator. The operation mainly completes analysis, prediction, planning, and configuration of the daily network and services. The maintenance mainly involves daily operation activities such as testing, fault management, and the like of the network and its services.

The UPF 107 is mainly responsible for user plane routing and forwarding functions.

The NEF 108 is a control plane network element of the core network, mainly responsible for exposing mobile network capabilities and converting internal and external information, and the like.

The PCF 109 is a control plane network element of the core network, mainly configured to acquire the policy information subscribed by the user terminal, and deliver the policy information to the AMF and SMF devices.

The UDM 110 is a control plane network element of the core network, mainly responsible for unified processing of front-end data, including UE identifiers, user subscription data, authentication data, and the like.

The AF 111 interacts with the 5G core network to provide services, supporting application influence on traffic routing, accessing the NEF, interacting with the policy framework, and the like.

It should be noted that names of communication devices or network elements in the above architecture are for illustrative purposes only and are used to refer to network elements in the 5G core network with corresponding functions. The connection relationships among respective communication devices or network elements are merely examples. In actual implementations, the names of the communication devices or network elements and the connection relationships among respective communication devices or network elements may be reflected in other forms, which are not specifically limited by the present disclosure.

An embodiment of the present disclosure provides a method for transmitting data in a roaming scenario. FIG. 2 is a flowchart illustrating a method for transmitting data in a roaming scenario according to an exemplary embodiment of the present disclosure. As shown in FIG. 2, the method includes steps S201 to S205, specifically as follows:
in step S201: a Network Data Analytics Function in a Home Public Land Mobile Network H-NWDAF, according to a first request message of a Consumer Network Function in a Home Public Land Mobile Network (H-Consumer NF), sends a second request message to a Central Network Function in a Visited Public Land Mobile Network (V-Central NF), where the second request message is configured to request setting data.
in step S202: the V-Central NF receives the second request message.
in step S203: after a first Network Element (NE) of a Visited Public Land Mobile Network checks that user consent is granted, the V-Central NF sends a first message configured to indicate the setting data to the H-NWDAF.
in step S204: the H-NWDAF receives the first message.
in step S205: the H-NWDAF sends a second message configured to indicate the setting data to the H-Consumer NF.

Herein, the H-NWDAF and H-Consumer NF are located in an HPLMN side, and the V-Central NF is located in a VPLMN side.

In some possible embodiments, the Consumer NF is configured to identify an entity or a network element that requests the setting data, and the H-Consumer NF may be any network element on the HPLMN side that requests or needs to use the setting data.

In some possible embodiments, the V-Central NF may serve as a processing center on the VPLMN side for handling or controlling data used for enablers for Network Automation (eNA) in a roaming scenario. For example, it may receive data from the HPLMN side and send/receive data from the network element on the VPLMN side.

] In an example, the V-Central NF may be a V-NWDAF, a Data Collection Coordination Function (DCCF), a Network Exposure Function (NEF), or a new network function such as a Gateway Exposure Function (GEF).

In some possible embodiments, the first request message may be, for example, Nnwdaf_AnalyticsSubscribe(), and the first request message is sent by the H-Consumer NF to the H-NWDAF.

In an example, the first request message includes at least one of: a user equipment identifier (UE ID) corresponding to the setting data, and a data processor identifier of the setting data.

In some possible embodiments, the UE identifier (UE ID) may include various formats and may uniquely identify a user device or a SIM card in the user device. For example, the UE identifier may be a Subscription Concealed Identifier (SUCI), a Subscription Permanent Identifier (SUPI), or other identifiers capable of identifying the UE. The SUPI is a unique identifier assigned by a network operator to each SIM card, and the SUCI is an identifier generated by concealing the SUPI through an encryption scheme.

In some possible embodiments, the data processor identifier may be a PLMN ID, an Application ID, a Service ID, an Analytics task ID (Analytics ID), or other identifiers capable of identifying the data processing task, which is not limited herein.

Taking the analytics task ID as the data processor identifier as an example, each analytics task corresponds to one analytics task ID, for instance: analytics task 1 corresponds to analytics ID1, analytics task 2 corresponds to analytics ID2, and the like.

In some possible embodiments, the second request message may be, for example, Analytics Request().

In some possible embodiments, the user consent may indicate an authorization status of the user regarding relevant data. The user consent may be stored in the VPLMN side network to indicate whether the analysis result or analytics information of the UE on the VPLMN side network is allowed to be acquired. The VPLMN side may perform relevant validation and authorization check based on the user consent to determine whether to provide the data to the HPLMN.

In an example, when the user device accesses the HPLMN, the determined user consent is stored in the HPLMN side network. The VPLMN side network acquires and stores the user consent via exchange with the UDM on the HPLMN side for subsequent checking.

In another example, in a roaming scenario, when the user device accesses the VPLMN or when it is required to perform a related analytics task at the VPLMN, the network of the VPLMN side interacts with the user device to acquire and store the user consent information for subsequent checking.

In some possible embodiments, the setting data includes: collected user data (collected data), or analytics information acquired based on the user data.

In some possible embodiments, the first message is, for example, Analytics Response().

In some possible embodiments, the second message is, for example:
Nnwdaf_AnalyticsSubscription_Notify().

In the embodiment of the present disclosure, in a roaming scenario, the H-Consumer NF may request the setting data from the V-Central NF via the H-NWDAF. The VPLMN side may perform the checking based on the user consent and, after the checking, send the relevant data to the H-Consumer NF via the H-NWDAF, which not only enables data exchange between the VPLMN and the HPLMN, but also effectively protects the security of the user data based on the user consent.

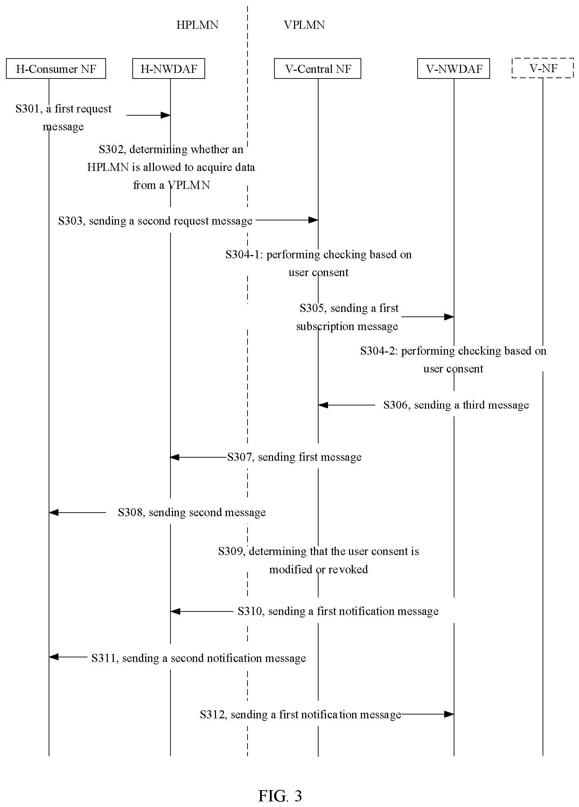

An embodiment of the present disclosure provides a method for transmitting data in a roaming scenario. FIG. 3 is a flowchart illustrating a method for transmitting data in a roaming scenario according to an exemplary embodiment of the present disclosure. As shown in FIG. 3, the method includes steps S301 to S308, specifically as follows:
in step S301: an H-Consumer NF sends a first request message to an H-NWDAF, where a first request message includes a data processor identifier and a user device identifier corresponding to requested data.
in step S302: the H-NWDAF determines, according to a local operator policy and/or a regulatory policy of the HPLMN, whether an HPLMN is allowed to acquire data from a VPLMN.
in step S303: when data acquisition from the VPLMN is allowed, the H-NWDAF sends a second request message to a V-Central NF.
in step S304: a first network element performs checking based on user consent.
in step S305: when setting data is analytics information, the V-Central NF sends a first subscription information a V-NWDAF.
in step S306: the V-NWDAF receives the first subscription information and sends a third message configured to indicate the analytics information to the V-Central NF.
in step S307: the V-Central NF receives the third message and sends a first message configured to indicate the analytics information to the H-NWDAF.
in step S308: upon receiving the first message, the H-NWDAF sends a second message configured to indicate the analytics information to the H-Consumer NF.

In some possible embodiments, in steps S302 to S303, the H-NWDAF performs checking or verification on the HPLMN side according to a local operator policy and/or a regulatory policy. Only when it is informed that it is allowed to acquire data such as analytics information from the VPLMN, i.e., when the use of the analytics information acquired from the VPLMN in the HPLMN is allowed, the H-NWDAF sends the second request message.

In some possible embodiments, the first network element may be the V-NWDAF or the V-Central NF on the VPLMN side.

When the first network element is different, step S304 may correspond to different implementations. Moreover, the execution order of steps S304 and S305 may be different when the first network element is different.

In some possible embodiments, when the first network element is the V-Central NF, step S304 may include step S304-1, in which the V-Central NF performs checking based on user consent, and the step S304-1 may include the following steps S304-11 to S304-12, specifically:
in step S304-11: the V-Central NF determines, according to the user consent and the local operator policy and/or the regulatory policy of the VPLMN, whether provision of the setting data to the HPLMN is allowed.
in step S304-12: when the provision of the setting data to the HPLMN is allowed, the V-Central NF determines that user consent is granted.

In the present embodiment, step S305 is performed after completing step S304 (i.e., steps S304-11 and S304-12).

In the present embodiment, the V-Central NF performs checking or verification on the VPLMN side in conjunction with the local operator policy and/or the regulatory policy of the VPLMN. The step S305 is executed when the checking is passed, i.e., after it is allowed to send data such as analytics information to the HPLMN.

In some possible embodiments, when the first network element is the V-NWDAF, step S304 may include step S304-2, in which the V-NWDAF performs checking based on user consent, and the step S304-2 may include the following steps S304-21 to S304-22, specifically:
in step S304-21: the V-NWDAF determines, according to the user consent and the local operator policy and/or the regulatory policy of the VPLMN, whether provision of the analytics information to the HPLMN is allowed.
in step S304-22: when the provision of the analytics information to the HPLMN is allowed, the V-NWDAF determines that user consent is granted.

In the present embodiment, step S305 is performed before step S304 (i.e., steps S304-21 and S304-22).

In the present embodiment, the V-NWDAF performs the checking or verification on the VPLMN side in conjunction with the local operator policy and/or the regulatory policy of the VPLMN.

In some possible embodiments, based on the functions of the NWDAF, the V-NWDAF may perform analysis on user data or network data and generate analytics information, also referred to as the analysis result. Thus, when the requested data on the HPLMN side is the analytics information, the V-Central NF sends a first subscription information to the V-NWDAF.

In some possible embodiments, the first subscription information is, for example:
Nnwdaf_AnalyticsSubscription_Subscribe().

In some possible embodiments, the third message includes the analytics information. For example, the third message is:
Nnwdaf_AnalyticsSubscription_Notify().

In some possible embodiments, in a scenario where the user consent is modified or revoked (user consent modification/revocation), the method may further include the following steps S309 to S312, specifically:
in step S309: the V-Central NF determines that the user consent is modified or revoked.
in step S310: the V-Central NF sends a first notification message to the H-NWDAF.
in step S311: the H-NWDAF sends a second notification message to the H-Consumer NF.
in step S312: the V-Central NF sends a first notification message to the V-NWDAF.

The execution order of steps S310 to S312 is illustrative and not limiting. For example, steps S310 and S312 may be executed simultaneously, or step S312 may be executed first. For another example, step S312 may be executed before step S311, or before steps S310 and S311.

In the present embodiment, the first notification message (notification messages) is configured to notify that the user consent is modified or revoked.

In the present embodiment, after receiving the first notification message, the V-NWDAF may stop generating the analytics information.

In the present embodiment, the second notification message (notification messages) is configured to notify the H-Consumer NF to stop processing the setting data and delete the setting data acquired.

In the present embodiment, the setting data is the analytics information, after receiving the second notification message, the H-Consumer NF stops processing the analytics information and deletes the previously acquired analytics information.

In the embodiment of the present disclosure, during the process in which the H-Consumer NF requests the analytics information from the V-Central NF via the H-NWDAF, both the HPLMN side and the VPLMN side may perform the checking respectively, further improving the security and reliability of data transmission. After the VPLMN side checks that the user consent is granted, the V-Central NF provides the analytics information to the HPLMN side via the V-NWDAF, thereby achieving secure and reliable exchange of analytics information between the VPLMN and the HPLMN.

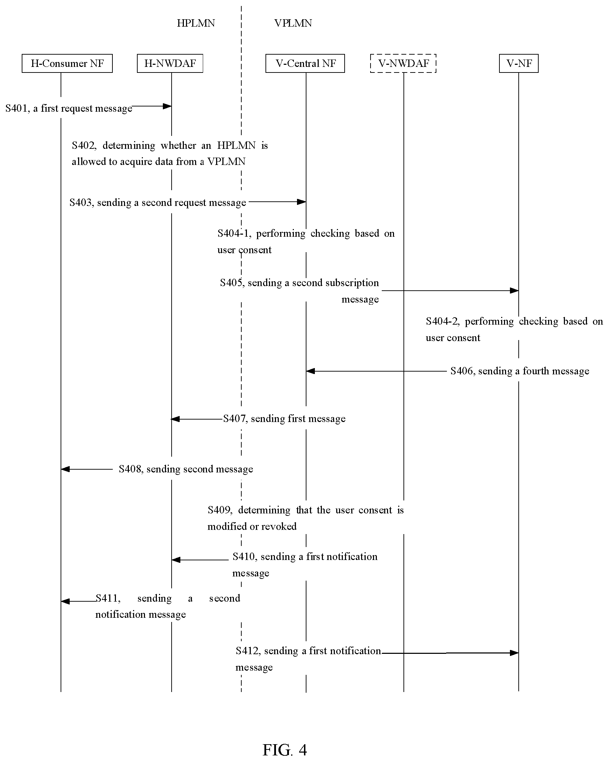

An embodiment of the present disclosure provides a method for transmitting data in a roaming scenario. FIG. 4 is a flowchart illustrating a method for transmitting data in a roaming scenario according to an exemplary embodiment of the present disclosure. As shown in FIG. 4, the method includes steps S401 to S408, specifically:
in step S401: the H-Consumer NF sends a first request message to the H-NWDAF, where a first request message includes a data processor identifier and a user device identifier corresponding to requested data.
in step S402: the H-NWDAF determines, according to a local operator policy and/or a regulatory policy of the HPLMN, whether an HPLMN is allowed to acquire data from a VPLMN.
in step S403: when data acquisition from the VPLMN is allowed, the H-NWDAF sends a second request message to the V-Central NF.
in step S404: a first network element performs checking based on user consent.
in step S405: when the setting data is user data, the V-Central NF sends a second subscription message to the V-NF.
in step S406: the V-NF receives the second subscription information and sends a fourth message configured to indicate the user data to the V-Central NF.
in step S407: the V-Central NF receives the fourth message and sends a first message configured to indicate the user data to the H-NWDAF.
in step S408: upon receiving the first message, the H-NWDAF sends a second message configured to indicate the user data to the H-Consumer NF.

In some possible embodiments, in steps S402 to S403, the H-NWDAF performs checking or verification on the HPLMN side according to a local operator policy and/or a regulatory policy. Only when it is informed that it is allowed to acquire data such as analytics information from the VPLMN, i.e., when the use of the analytics information acquired from the VPLMN in the HPLMN is allowed, the H-NWDAF sends the second request message.

In some possible embodiments, the first network element may be the V-Central NF or the V-NF on the VPLMN side.

When the first network element is different, step S404 may correspond to different implementations. Moreover, when the first network element is different, the execution order of steps S404 and S405 may be different.

In some possible embodiments, when the first network element is the V-Central NF, step S404 may include the following step S404-1, in which the V-Central NF performs checking based on user consent, and the tep S404-1 may include the following steps S404-11 to S404-12, specifically:
in step S404-11: the V-Central NF determines, according to the user consent and the local operator policy and/or the regulatory policy of the VPLMN, whether provision of the setting data to the HPLMN is allowed.
in step S404-12: when provision of the setting data to the HPLMN is allowed, the V-Central NF determines that user consent is granted.

In the present embodiment, step S405 is executed after completing step S404 (i.e., steps S404-11 and S404-12).

In the present embodiment, the V-Central NF performs checking or verification on the VPLMN side in conjunction with the local operator policy and/or the regulatory policy of the VPLMN. The step S305 is executed when the checking is passed, i.e., after it is allowed to send data such as analytics information to the HPLMN.

In some possible embodiments, when the first network element is the V-NF, step S404 may include step S404-2, in which the V-NF performs checking based on user consent, and the step S404-2 may include the following steps S404-21 to S404-22, specifically:
in step S404-21: the V-NF determines, according to the user consent and the local operator policy and/or the regulatory policy of the VPLMN, whether provision of the user data to the HPLMN is allowed.
in step S404-22: when provision of the user data to the HPLMN is allowed, the V-NF determines that user consent is granted.

In the present embodiment, step S405 is performed before step S404 (i.e., steps S404-21 and S404-22).

In the present embodiment, the V-NF performs the checking or verification on the VPLMN side in conjunction with the user consent and the local operator policy and/or the regulatory policy of the VPLMN.

In some possible embodiments, the V-NF may collect the user data. Thus, when the requested data on the HPLMN side is the user data, the V-Central NF sends the second subscription information to the V-NF.

In some possible embodiments, the second subscription information is, for example:
Nnf_EventExpose_Subscribe().

In some possible embodiments, the fourth message includes user data. For example, the fourth message is:
Nnf_Nnf_EventExpose_Notify_().

In some possible embodiments, in a scenario where the user consent is modified or revoked (user consent modification/revocation), the method may further include the following steps S409 to S412, specifically:
in step S409: the V-Central NF determines that the user consent is modified or revoked.
in step S410: the V-Central NF sends a first notification message to the H-NWDAF.
in step S411: the H-NWDAF sends a second notification message to the H-Consumer NF.
in step S412: the V-Central NF sends a first notification message to the V-NF.

The execution order of steps S410 to S412 is illustrative and not limiting. For example, steps S410 and S412 may be executed simultaneously, or step S412 may be executed first. For another example, step S412 may be executed before step S411, or before steps S410 and S411.

In the present embodiment, the first notification message (notification messages) is configured to notify that the user consent is modified or revoked.

In the present embodiment, after receiving the first notification message, the V-NF may stop collecting user data.

In the present embodiment, the second notification message (notification messages) is configured to notify the H-Consumer NF to stop processing the setting data and delete the acquired setting data.

In the present embodiment, the setting data is user data, and after receiving the second notification message, the H-Consumer NF stops processing the user data and deletes the acquired user data.

In the embodiment of the present disclosure, during the process in which the H-Consumer NF requests analytics information from the V-Central NF via the H-NWDAF, both the HPLMN side and the VPLMN side may perform the checking, respectively, further improving the security and reliability of data transmission. After the VPLMN side checks that user consent is granted, the V-Central NF provides the user data to the HPLMN side via the V-NF, thereby achieving secure and reliable exchange of the analytics information between the VPLMN and the HPLMN.

In combination with the embodiments of FIG. 2 to FIG. 4, the embodiment of the present disclosure provides an approach for user consent in an eNA project roaming scenario when the setting data is requested by the HPLMN side from the VPLMN side, which ensures that user privacy data is not leaked during the exchange process, improving security and reliability. In addition, when the user consent is modified or revoked, the present disclosure also provides a corresponding implementation to avoid privacy data leakage.

An embodiment of the present disclosure provides a method for receiving data in a roaming scenario, and the method is performed by the H-NWDAF.

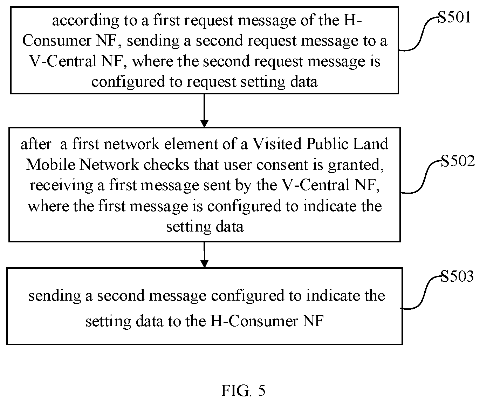

FIG. 5 is a flowchart illustrating a method for receiving data in a roaming scenario according to an exemplary embodiment of the present disclosure. As shown in FIG. 5, the method includes steps S501 to S503, specifically:
in step S501: the H-NWDAF, according to a first request message of the H-Consumer NF, sends a second request message to a V-Central NF, where the second request message is configured to request setting data.
in step S502: after a first network element of a Visited Public Land Mobile Network checks that user consent is granted, the H-NWDAF receives a first message sent by the V-Central NF, where the first message is configured to indicate the setting data.
in step S503: the H-NWDAF sends a second message configured to indicate the setting data to the H-Consumer NF.

In some possible embodiments, the first request message is, for example, Nnwdaf_AnalyticsSubscribe().

In some possible embodiments, the second request message is, for example, Analytics Request().

In some possible embodiments, the user consent may indicate an authorization status of the user regarding relevant data. The user consent may be stored in the VPLMN side network to indicate whether the analysis result or analytics information of the UE on the VPLMN side network is allowed to be acquired. The VPLMN side may perform relevant validation and authorization check based on the user consent to determine whether to provide the data to the HPLMN.

In some possible embodiments, the setting data includes: collected user data (collected data), or analytics information.

In some possible embodiments, the first message is, for example, Analytics Response().

In some possible embodiments, the second message is, for example:
Nnwdaf_AnalyticsSubscription_Notify().

In some possible embodiments, the first network element of the Visited Public Land Mobile Network is one of the following: the V-Central NF; a Network Data Analytics Function in a Visited Public Land Mobile Network V-NWDAF; or a Network Function in a Visited Public Land Mobile Network V-NF.

In the embodiment of the present disclosure, in a roaming scenario, the H-Consumer NF may request the setting data from the V-Central NF via the H-NWDAF. The VPLMN side may perform the checking based on the user consent and, after the checking, send the relevant data to the H-Consumer NF via the H-NWDAF, which not only enables data exchange between the VPLMN and the HPLMN, but also effectively protects the security of the user data based on the user consent.

An embodiment of the present disclosure provides a method for receiving data in a roaming scenario, which is performed by the H-NWDAF. The method includes steps S500 to S503, specifically:
in step S500: the H-NWDAF receives a first request message sent by an H-Consumer NF.
in step S501: the H-NWDAF, according to the first request message of the H-Consumer NF, sends a second request message to a V-Central NF, where the second request message is configured to request setting data.
in step S502: after a first network element checks that user consent is granted, the H-NWDAF receives a first message sent by the V-Central NF, where the first message is configured to indicate the setting data.
in step S503: the H-NWDAF sends a second message configured to indicate the setting data to the H-Consumer NF.

In some possible embodiments, the setting data includes: collected user data, or analytics information.

In some possible embodiments, the first request message includes at least one of: a UE identifier (UE ID) corresponding to the setting data, and a data processor identifier (Data Processor ID) of the setting data.

For example, the first request message includes the UE identifier, or the first request message includes the data processor identifier, or the first request message includes both the UE identifier and the data processor identifier.

In an example, the UE identifier corresponds to an identifier of a target UE, i.e., the setting data requested by the HPLMN side is data related to the UE corresponding to the UE identifier.

The UE identifier may include the UE ID of one user device, or the UE IDs of more than one user device.

In some possible embodiments, the UE identifier (UE ID) may include various formats and may uniquely identify a user device or a SIM card in the user device. For example, the UE identifier may be a Subscription Concealed Identifier (SUCI), a Subscription Permanent Identifier (SUPI), or other identifiers capable of identifying the UE. The SUPI is a unique identifier assigned by a network operator to each SIM card, and the SUCI is an identifier generated by concealing the SUPI through an encryption scheme.

In an example, the data processor identifier is an identifier related to the requested setting data.

In some possible embodiments, the data processor identifier may be a PLMN ID, an Application ID, a Service ID, an Analytics task ID (Analytics ID), or other identifiers capable of identifying the data processing task, which is not limited herein.

Taking the analytics task ID as the data processor identifier as an example, each analytics task corresponds to one analytics task ID, for instance: analytics task 1 corresponds to analytics ID1, analytics task 2 corresponds to analytics ID2, and the like.

In some possible embodiments, the H-Consumer NF may directly send the first request message to the H-NWDAF, as shown in FIG. 3 or FIG. 4.

In some possible embodiments, when the AF serves as the H-Consumer NF, the H-Consumer NF sends the first request message to the H-NWDAF indirectly through the NEF. For example, the AF first sends the first request message to the NEF, and then the NEF sends the first request message to the H-NWDAF.

An embodiment of the present disclosure provides a method for receiving data in a roaming scenario, which is performed by the H-NWDAF. The method includes steps S500, S501-1, S501-2, S502, and S503, specifically:
in step S500: the H-NWDAF receives a first request message sent by an H-Consumer NF.
in step S501-1: after receiving the first request message, the H-NWDAF determines, according to a local operator policy and/or a regulatory policy of the HPLMN, whether the HPLMN is allowed to acquire data from the VPLMN.
in step S501-2: when the HPLMN is allowed to acquire data from the VPLMN, the H-NWDAF sends a second request message to the V-Central NF, where the second request message is configured to request setting data.
in step S502: after a first network element of a Visited Public Land Mobile Network checks that user consent is granted, the H-NWDAF receives a first message sent by the V-Central NF, where the first message is configured to indicate the setting data.
in step S503: the H-NWDAF sends a second message configured to indicate the setting data to the H-Consumer NF.

In some possible embodiments, the setting data includes: collected user data, or analytics information.

In some possible embodiments, the first network element of the Visited Public Land Mobile Network is one of the following: the V-Central NF; a Network Data Analytics Function in a Visited Public Land Mobile Network V-NWDAF; or a Network Function in a Visited Public Land Mobile Network V-NF.

In some possible embodiments, the H-NWDAF performs checking or verification on the HPLMN side according to a local operator policy and/or a regulatory policy. Only when it is informed that it is allowed to acquire data such as analytics information from the VPLMN, i.e., when the use of the analytics information acquired from the VPLMN in the HPLMN is allowed, the H-NWDAF sends the second request message.

An embodiment of the present disclosure provides a method for receiving data in a roaming scenario, which is performed by the H-NWDAF.

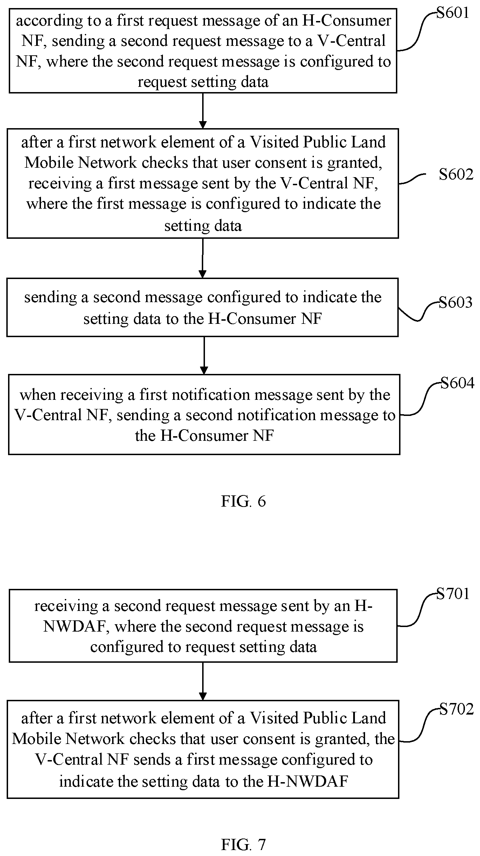

FIG. 6 is a flowchart illustrating a method for receiving data in a roaming scenario according to an exemplary embodiment of the present disclosure. As shown in FIG. 6, the method includes steps S601 to S604, specifically:
in step S601: the H-NWDAF, according to a first request message of an H-Consumer NF, sends a second request message to a V-Central NF, where the second request message is configured to request setting data.
in step S602: after a first network element of a Visited Public Land Mobile Network checks that user consent is granted, the H-NWDAF receives a first message sent by the V-Central NF, where the first message is configured to indicate the setting data.
in step S603: the H-NWDAF sends a second message configured to indicate the setting data to the H-Consumer NF.
in step S604: when receiving a first notification message sent by the V-Central NF, the H-NWDAF sends a second notification message to the H-Consumer NF.

The first notification message is configured to notify that the user consent is modified or revoked, and the second notification message is configured to notify the H-Consumer NF to stop processing the setting data and delete the setting data acquired.

In some possible embodiments, after receiving the second notification message, the H-Consumer NF stops processing the setting data and deletes the acquired setting data.

In some possible embodiments, the setting data includes: collected user data, or analytics information.

In some possible embodiments, the first network element of the Visited Public Land Mobile Network is one of the following: the V-Central NF; a Network Data Analytics Function in a Visited Public Land Mobile Network V-NWDAF; or a Network Function in a Visited Public Land Mobile Network V-NF.

In the embodiment of the present disclosure, when it is involved that the user consent is modified or revoked, the V-Central NF promptly sends the first notification message; after receiving the first notification message, the H-NWDAF promptly notifies the H-Consumer NF to stop processing the setting data and delete the acquired setting data, thereby improving the security of setting data transmission in the scenario of user consent modification or revocation, and preventing leakage of private data in such scenarios.

An embodiment of the present disclosure provides a method for sending data in a roaming scenario, and the method is performed by the V-Central NF.

FIG. 7 is a flowchart illustrating a method for sending data in a roaming scenario according to an exemplary embodiment of the present disclosure. As shown in FIG. 7, the method includes steps S701 to S702, specifically:
in step S701: the V-Central NF receives a second request message sent by an H-NWDAF, where the second request message is configured to request setting data.
in step S702: after a first network element of a Visited Public Land Mobile Network checks that user consent is granted, the V-Central NF sends a first message configured to indicate the setting data to the H-NWDAF.

In some possible embodiments, the second request message is, for example, Analytics Request().

In some possible embodiments, the user consent may indicate an authorization status of the user regarding relevant data. The user consent may be stored in the VPLMN side network to indicate whether the analysis result or analytics information of the UE on the VPLMN side network is allowed to be acquired. The VPLMN side may perform relevant validation and authorization check based on the user consent to determine whether to provide the data to the HPLMN.

In an example, when the user device accesses the HPLMN, the determined user consent is stored in the HPLMN side network. The VPLMN side network acquires and stores the user consent via exchange with the UDM on the HPLMN side for subsequent checking.

In another example, in a roaming scenario, when the user device accesses the VPLMN or it is required to perform a related analytics task at the VPLMN, the network of the VPLMN side interacts with the user device to acquire and store the user consent information for subsequent checking.

In some possible embodiments, the setting data includes: collected user data, or analytics information.

In some possible embodiments, the first message is, for example, Analytics Response().

In some possible embodiments, the first network element of the Visited Public Land Mobile Network is one of the following: the V-Central NF; a V-NWDAF; or a V-NF. That is, the checking based on the user consent may be performed by any one of these three.

In an example, the V-Central NF performs the checking based on the user consent, and after the user consent is granted, requests analytics information from the V-NWDAF or requests user data from the V-NF.

In an example, the V-NWDAF performs the checking based on the user consent. This approach is applicable in scenarios where the setting data is analytics information. In this example, the V-Central NF does not need to perform the checking.

In an example, the V-NF performs the checking based on the user consent. This approach is applicable in scenarios where the setting data is user data. In this example, the V-Central NF does not need to perform the checking.

The above examples may refer to the embodiments illustrated in FIG. 3 or FIG. 4, or the related descriptions in the embodiments below.

In some possible embodiments, the V-Central NF is one of the following:
a V-NWDAF;
a Data Collection Coordination Function (DCCF);
a Network Exposure Function (NEF); or
a Gateway Exposure Function (GEF).

In the embodiment of the present disclosure, in a roaming scenario, after receiving a second request message from the H-NWDAF, the V-Central NF may perform the checking based on the user consent, and after the checking, send relevant data to the H-Consumer NF via the H-NWDAF, which enables data exchange between the VPLMN and the HPLMN, while effectively protecting the security of user data based on the user consent.

An embodiment of the present disclosure provides a method for sending data in a roaming scenario, and the method is performed by the V-Central NF. The method includes step S701 and steps S702-11 to S702-13, specifically:
in step S701: the V-Central NF receives a second request message sent by an H-NWDAF, where the second request message is configured to request setting data.
in step S702-11: when the setting data is analytics information, the V-Central NF sends a first subscription message to a V-NWDAF.
in step S702-12: the V-Central NF receives a third message configured to indicate the analytics information from the V-NWDAF.
in step S702-13: after a first network element of a Visited Public Land Mobile Network checks that user consent is granted, the V-Central NF sends a first message configured to indicate the analytics information to the H-NWDAF.

In some possible embodiments, the V-NWDAF may analyze user data or network data and generate analytics information, also referred to as an analysis result. Thus, when the requested data on the HPLMN side is the analytics information, the V-Central NF sends a first subscription information to the V-NWDAF.

In some possible embodiments, the first subscription information is, for example:
Nnwdaf_AnalyticsSubscription_Subscribe().

In some possible embodiments, the third message includes analytics information. For example, the third message is:
Nnwdaf_AnalyticsSubscription_Notify().

In the embodiment of the present disclosure, in a scenario where analytics information is requested by the HPLMN side, the V-Central NF may acquire a message including analytics information from the V-NWDAF and provide the message including the analytics information to the HPLMN side.

An embodiment of the present disclosure provides a method for sending data in a roaming scenario, and the method is performed by the V-Central NF. The method includes step S701 and steps S702-21 to S702-23, specifically:
in step S701: the V-Central NF receives a second request message sent by an H-NWDAF, where the second request message is configured to request setting data.
in step S702-21: when the setting data is user data, the V-Central NF sends a second subscription message to a V-NF.
in step S702-22: the V-Central NF receives a fourth message configured to indicate the user data from the V-NF.
in step S702-23: after a first network element of a Visited Public Land Mobile Network checks that user consent is granted, the V-Central NF sends a first message configured to indicate the user data to the H-NWDAF.

In some possible embodiments, the V-NF may collect user data. Thus, when the requested data on the HPLMN side is user data, the V-Central NF sends the second subscription information to the V-NF.

In some possible embodiments, the second subscription information is, for example:
Nnf_EventExpose_Subscribe().

In some possible embodiments, the fourth message includes user data. For example, the fourth message is:
Nnf_Nnf_EventExpose_Notify_().

In the embodiment of the present disclosure, in a scenario where user data is requested by the HPLMN side, the V-Central NF may acquire a message including the user data from the V-NF and provide the message including the user data to the HPLMN side.

An embodiment of the present disclosure provides a method for sending data in a roaming scenario, and the method is performed by the V-Central NF.

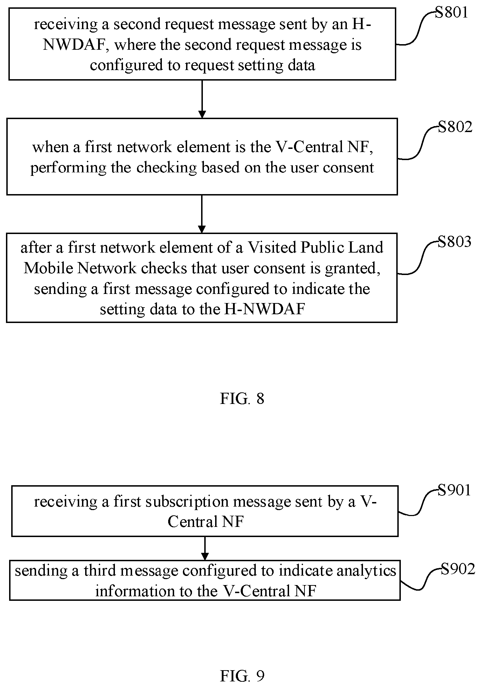

FIG. 8 is a flowchart illustrating a method for sending data in a roaming scenario according to an exemplary embodiment of the present disclosure. As shown in FIG. 8, the method includes steps S801 to S803, specifically:
in step S801: the V-Central NF receives a second request message sent by an H-NWDAF, where the second request message is configured to request setting data.
in step S802: when a first network element is the V-Central NF, the V-Central NF performs the checking based on the user consent.
in step S803: after a first network element of the Visited Public Land Mobile Network checks that user consent is granted, the V-Central NF sends a first message configured to indicate the setting data to the H-NWDAF.

In some possible embodiments, when the method of the present disclosure includes step S701 and steps S702-11 to S702-13, step S802 may be executed between step S701 and step S702-11.

In some possible embodiments, when the method of the present disclosure includes step S701 and steps S702-21 to S702-23, step S802 may be executed between step S701 and step S702-21.

In some possible embodiments, step S802 may include the following steps S802-1 to S802-2, specifically:
in step S802-1: the V-Central NF determines, according to the user consent and a local operator policy and/or a regulatory policy of a VPLMN, whether provision of the setting data to the HPLMN is allowed.
in step S802-2: when provision of the setting data to the HPLMN is allowed, the V-Central NF determines that user consent is granted.

In some possible embodiments, the setting data includes: collected user data, or analytics information.

In the embodiment of the present disclosure, the V-Central NF performs a VPLMN side checking or verification according to the user consent and in conjunction with a local operator policy and/or a regulatory policy of a VPLMN. After user consent is granted, i.e., when provision of setting data to the HPLMN is allowed, the data is provided to the HPLMN side to enhance security.

An embodiment of the present disclosure provides a method for sending data in a roaming scenario, and the method is performed by the V-Central NF.

The method includes steps S701 to S703, specifically:
in step S701: the V-Central NF receives a second request message sent by an H-NWDAF, where the second request message is configured to request setting data.
in step S702: after a first network element of a Visited Public Land Mobile Network checks that user consent is granted, the V-Central NF sends a first message configured to indicate the setting data to the H-NWDAF.
in step S703: when the user consent is modified or revoked, a first notification message is sent to the H-NWDAF.

Alternatively, the method includes steps S801 to S804, specifically:
in step S801: the V-Central NF receives a second request message sent by the H-NWDAF, where the second request message is configured to request setting data.
in step S802: when the first network element is the V-Central NF, the V-Central NF performs the checking based on the user consent.
in step S803: after a first network element of a Visited Public Land Mobile Network checks that user consent is granted, the V-Central NF sends a first message configured to indicate the setting data to the H-NWDAF.
in step S804: when the user consent is modified or revoked, a first notification message is sent to the H-NWDAF.

In some possible embodiments, the first notification message (notification messages) is configured to notify that the user consent is modified or revoked.

In some possible embodiments, after receiving the first notification message, the H-NWDAF promptly notifies the H-Consumer NF to stop processing the setting data and delete the acquired setting data, thereby ensuring data security in this user consent change scenario.

In some possible embodiments, the setting data includes: collected user data, or analytics information.

In the embodiment of the present disclosure, when it is involved that the user consent is modified or revoked, the V-Central NF promptly sends the first notification message, such that the H-NWDAF promptly notifies the H-Consumer NF to stop processing the setting data and delete the acquired setting data. This improves the security of setting data transmission in the scenario of user consent modification or revocation, and prevents privacy data leakage under this scenario.

An embodiment of the present disclosure provides a method for sending data in a roaming scenario, and the method is performed by the V-Central NF. The method may include steps S701 to S702, or steps S701 to S703; alternatively, the method may include steps S801 to S803, or steps S801 to S804.

Taking the method including steps S701 to S703 as an example, the method may further include the following steps S701 to S703 and S704-1, or S701 to S703 and S704-2, namely:
in step S701: the V-Central NF receives a second request message sent by the H-NWDAF, where the second request message is configured to request setting data.
in step S702: after a first network element of a Visited Public Land Mobile Network checks that user consent is granted, the V-Central NF sends a first message configured to indicate the setting data to the H-NWDAF.

In some possible embodiments, the setting data includes: collected user data, or analytics information.
in step S703: when the user consent is modified or revoked, the V-Central NF sends a first notification message to the H-NWDAF.
in step S704-1: when the setting data is analytics information, and the user consent is modified or revoked, the V-Central NF sends a first notification message to the V-NWDAF.

In some possible embodiments, after receiving the first notification message, the V-NWDAF may stop generating the analytics information.
in step S704-2: when the setting data is user data, and the user consent is modified or revoked, the V-Central NF sends a first notification message to the V-NF.

In some possible embodiments, after receiving the first notification message, the V-NF may stop collecting user data.

In the embodiment of the present disclosure, when it is involved that the user consent is modified or revoked, the V-Central NF also promptly notifies the V-NWDAF or V-NF in conjunction with the different circumstances of the setting data, such that both may promptly stop generating and sending the setting data.

An embodiment of the present disclosure provides a method for sending data in a roaming scenario, and the method is performed by the V-NWDAF.

FIG. 9 is a flowchart illustrating a method for sending data in a roaming scenario according to an exemplary embodiment of the present disclosure. As shown in FIG. 9, the method includes steps S901 to S902, specifically:
in step S901: the V-NWDAF receives a first subscription message sent by a V-Central NF.
in step S902: the V-NWDAF sends a third message configured to indicate analytics information to the V-Central NF.

In some possible embodiments, the V-NWDAF may analyze user data or network data and generate analytics information, also referred to as an analysis result. Thus, when the requested data on the HPLMN side is the analytics information, the V-Central NF sends a first subscription information to the V-NWDAF.

In some possible embodiments, the first subscription information is, for example:
Nnwdaf_AnalyticsSubscription_Subscribe().

In some possible embodiments, the third message includes analytics information. For example, the third message is:
Nnwdaf_AnalyticsSubscription_Notify().

In the embodiment of the present disclosure, when the requested setting data is analytics information, the V-NWDAF provides the third message including the analytics information to the V-Central NF, such that the V-Central NF provides the requested analytics information to the HPLMN side, thereby achieving secure and reliable analytics information exchange between the VPLMN and the HPLMN.

An embodiment of the present disclosure provides a method for sending data in a roaming scenario, and the method is performed by the V-NWDAF. The method includes steps S901, S900, and S902, specifically:
in step S901: the V-NWDAF receives a first subscription message sent by the V-Central NF.
in step S900: in response to the V-NWDAF serving as the first network element, the V-NWDAF performs the checking based on the user consent.
in step S902: the V-NWDAF sends a third message configured to indicate the analytics information to the V-Central NF.

In some possible embodiments, when the V-NWDAF serves as the first network element, the V-Central NF does not need to perform the checking based on user consent; instead, the V-NWDAF performs the checking. In this case, step S900 may be executed between steps S901 and S902. This solution may also refer to the embodiment shown in FIG. 3.

In some possible embodiments, step S900 may include the following steps S900-1 to S900-2, specifically:
in step S900-1: according to the user consent and a local operator policy and/or a regulatory policy of a VPLMN, the V-NWDAF determines whether provision of the analytics information to the HPLMN is allowed.
in step S900-2: when provision of the analytics information to the HPLMN is allowed, the V-NWDAF determines that user consent is granted.

In the embodiment of the present disclosure, in a scenario where the setting data is analytics information, the checking based on the user consent may be performed by the V-NWDAF, so as to provide an alternative approach to enhance the security of transmitting the analytics information.

An embodiment of the present disclosure provides a method for sending data in a roaming scenario, and the method is performed by the V-NWDAF. The method includes steps S901 to S903, specifically:
in step S901: the V-NWDAF receives a first subscription message sent by a V-Central NF.
in step S902: the V-NWDAF sends a third message configured to indicate the analytics information to the V-Central NF.
in step S903: upon receiving a first notification message sent by the V-Central NF, generation of analytics message is stopped, where the first notification message is configured to notify that the user consent is modified or revoked.

In the embodiment of the present disclosure, when it is involved that the user consent is modified or revoked, the V-NWDAF may promptly stop generating analytics information according to the first notification message sent by the V-Central NF, so as to avoid privacy data leakage in this scenario.

An embodiment of the present disclosure provides a method for sending data in a roaming scenario, and the method is performed by the V-NF.

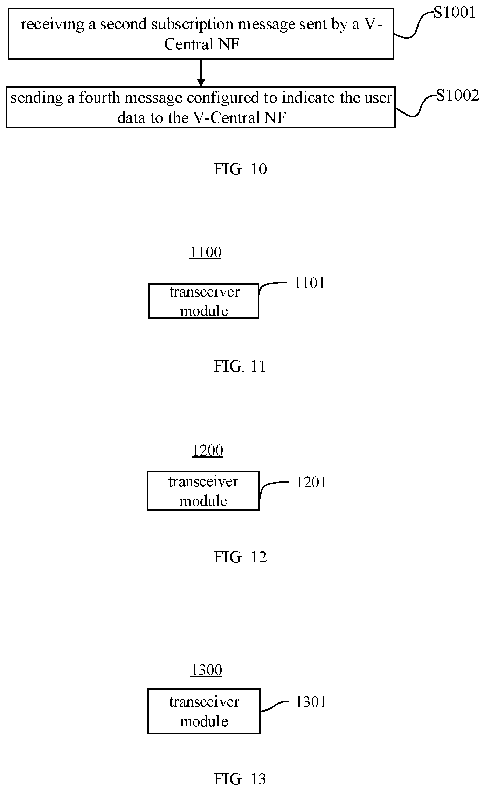

FIG. 10 is a flowchart illustrating a method for sending data in a roaming scenario according to an exemplary embodiment of the present disclosure. As shown in FIG. 10, the method includes steps S1001 to S1002, specifically:
in step S1001: the V-NF receives a second subscription message sent by a V-Central NF.
in step S1002: the V-NF sends a fourth message configured to indicate the user data to the V-Central NF.

In some possible embodiments, the V-NF may collect user data. Thus, when the requested data on the HPLMN side is the user data, the V-Central NF sends a second subscription information to the V-NF.

In some possible embodiments, the second subscription information is, for example:
Nnf_EventExpose_Subscribe().

In some possible embodiments, the fourth message includes user data. For example, the fourth message is:
Nnf_Nnf_EventExpose_Notify_().

In the embodiment of the present disclosure, when the requested setting data is the user data, the V-NF provides the fourth message including the user data to the V-Central NF, such that the V-Central NF provides the requested user data to the HPLMN side, thereby achieving secure and reliable exchange of analytics information between the VPLMN and the HPLMN.

An embodiment of the present disclosure provides a method for sending data in a roaming scenario, and the method is performed by the V-NF. The method includes steps S1001, S1000, and S1002, specifically:
in step S1001: the V-NF receives a second subscription message sent by a V-Central NF.
in step S1000: in response to the V-NF serving as a first network element, the V-NF performs checking based on user consent.
in step S1002: the V-NF sends a fourth message configured to indicate user data to the V-Central NF.

In some possible embodiments, when the V-NF serves as the first network element, the V-Central NF does not need to perform the checking based on user consent; the checking is instead performed by the V-NF. In this case, step S1000 may be executed between steps S1001 and S1002. This solution may also refer to the embodiment shown in FIG. 4.

In some possible embodiments, step S1000 may include the following steps S1000-1 to S1000-2, specifically:
in step S1000-1: according to the user consent and a local operator policy and/or a regulatory policy of a VPLMN, the V-NF determines whether provision of the user data to the HPLMN is allowed.
in step S1000-2: when provision of the user data to the HPLMN is allowed, the V-NF determines that user consent is granted.

In the embodiment of the present disclosure, in a scenario where the setting data is user data, the checking based on the user consent may be performed by the V-NF, thereby providing an alternative approach to enhance the security of transmitting user data.

An embodiment of the present disclosure provides a method for sending data in a roaming scenario, which is performed by the V-NF. The method includes steps S1001 to S1003, specifically:
in step S1001: the V-NF receives a second subscription message sent by the V-Central NF.
in step S1002: the V-NF sends a fourth message configured to indicate the user data to the V-Central NF.
in step S1003: upon receiving a first notification message sent by the V-Central NF, the V-NF stops generating the user data, where the first notification message is configured to notify that the user consent is modified or revoked.

In the embodiment of the present disclosure, when it is involved that the user consent is modified or revoked, the V-NF may promptly stop generating user data according to the first notification message sent by the V-Central NF, so as to avoid privacy data leakage in this scenario.

Based on the same concept as the above method embodiments, embodiments of the present disclosure also provide an apparatus for receiving data in a roaming scenario. The apparatus may include the functions of the H-NWDAF in the above method embodiments, and is used for performing the steps executed by the H-NWDAF. The functions may be implemented by a hardware, or implemented by performing corresponding software with software or hardware. The hardware or software includes one or more modules corresponding to the described functions.

In a possible implementation, the apparatus 1100 shown in FIG. 11 may serve as the H-NWDAF device involved in the above method embodiments, and perform the steps executed by the H-NWDAF.

As shown in FIG. 11, the apparatus 1100 includes a transceiver module 1101.

The transceiver module 1101 is configured to send a second request message to the Central Network Function in the Visited Public Land Mobile Network V-Central NF according to a first request message of the Consumer Network Function in the Home Public Land Mobile Network H-Consumer NF, where the second request message is configured to request setting data;
the transceiver module 1101 is further configured to receive a first message sent by the V-Central NF after a first network element of a Visited Public Land Mobile Network checks that user consent is granted, the first message being configured to indicate the setting data;
the transceiver module 1101 is further configured to send a second message configured to indicate the setting data to the H-Consumer NF.

Based on the same concept as the above method embodiments, embodiments of the present disclosure also provide an apparatus for sending data in a roaming scenario. The apparatus may include the functions of the V-Central NF in the above method embodiments, and is used for performing the steps executed by the V-Central NF. The functions may be implemented by a hardware, or implemented by performing corresponding software with software or hardware. The hardware or software includes one or more modules corresponding to the described functions.

In a possible implementation, the apparatus 1200 shown in FIG. 12 may serve as the V-Central NF device involved in the above method embodiments, and perform the steps executed by the V-Central NF.

As shown in FIG. 12, the apparatus 1200 includes a transceiver module 1201.

The transceiver module 1201 is configured to receive a second request message sent by an H-NWDAF, where the second request message is configured to request setting data;
the transceiver module 1201 is further configured to send a first message configured to indicate the setting data to the H-NWDAF after a first network element of a Visited Public Land Mobile Network checks that user consent is granted.

Based on the same concept as the above method embodiments, embodiments of the present disclosure also provide an apparatus for sending data in a roaming scenario. The apparatus may include the functions of the V-NWDAF in the above method embodiments, and is used for performing the steps executed by the V-NWDAF. The functions may be implemented by a hardware, or implemented by performing corresponding software with software or hardware. The hardware or software includes one or more modules corresponding to the described functions.

In a possible implementation, the apparatus 1300 shown in FIG. 13 may serve as the V-NWDAF device involved in the above method embodiments, and perform the steps executed by the V-NWDAF.

As shown in FIG. 13, the apparatus 1300 includes a transceiver module 1301.

The transceiver module 1301 is configured to receive a first subscription message sent by a V-Central NF;
the transceiver module 1301 is further configured to send a third message configured to indicate analytics information to the V-Central NF.

Based on the same concept as the above method embodiments, embodiments of the present disclosure also provide an apparatus for sending data in a roaming scenario. The apparatus may include the functions of the V-NF in the above method embodiments, and is used for performing the steps executed by the V-NF. The functions may be implemented by a hardware, or implemented by performing corresponding software with software or hardware. The hardware or software includes one or more modules corresponding to the described functions.

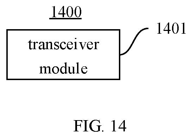

In a possible implementation, the apparatus 1400 shown in FIG. 14 may serve as the V-NF device involved in the above method embodiments, and perform the steps executed by the V-NF.

As shown in FIG. 14, the apparatus 1400 includes a transceiver module 1401.

The transceiver module 1401 is configured to receive a second subscription message sent by a V-Central NF;
the transceiver module 1401 is further configured to send a fourth message configured to indicate user data to the V-Central NF.

The present disclosure also provides a communication device, including a processor and a memory; the memory is configured to store a computer program; the processor is configured to execute the computer program to implement the method for transmitting data in a roaming scenario corresponding to the above-described devices.

The present disclosure also provides a computer-readable storage medium, where the computer-readable storage medium stores instructions (also referred to as a computer program or program), which, when executed on a computer, cause the computer to perform the method for transmitting data in a roaming scenario corresponding to the above-described devices.

It is apparent to those skilled in the art that the above processing units or steps may be implemented using general-purpose computing devices, which may be centralized on a single computing device or distributed over a network composed of multiple computing devices. Optionally, they may be implemented using program code executable by a computing device, such that they can be stored in a storage device and executed by the computing device, or they can be implemented as respective integrated circuit modules, or multiple modules or steps thereof may be implemented as a single integrated circuit module. Therefore, the present disclosure is not limited to any specific hardware and software combination.

Other embodiments of the present disclosure will be apparent to those skilled in the art from consideration of the specification and practice of the invention disclosed herein. It is intended that this application cover any variations, uses, or adaptations of the present disclosure that follow the general principles of the present disclosure and include known or customary techniques in the art that are not explicitly disclosed herein. The specification and embodiments are to be considered as illustrative only, and the true scope and spirit of the present disclosure are defined by the following claims.

It should be understood that the embodiments of the present disclosure are not limited to the precise structures described above and shown in the accompanying drawings, and various modifications and changes may be made without departing from the scope thereof. The scope of the embodiments of the present disclosure is defined only by the appended claims.

### Industrial Applicability

In the embodiment of the present disclosure, in a roaming scenario, the H-Consumer NF may request setting data from the V-Central NF via the H-NWDAF, the VPLMN side may perform checking based on user consent, and after the checking, send the relevant data to the H-Consumer NF via the H-NWDAF. This enables data exchange between the VPLMN and the HPLMN, while effectively protecting the security of user data based on user consent.

## Claims

1. A method for receiving data in a roaming scenario, performed by a Network Data Analytics Function in a Home Public Land Mobile Network H-NWDAF, comprising:
sending, according to a first request message of a Consumer Network Function in the Home Public Land Mobile Network H-Consumer NF, a second request message to a Central Network Function in a Visited Public Land Mobile Network V-Central NF, wherein the second request message is configured to request setting data;
receiving, after a first network element of the Visited Public Land Mobile Network checks that user consent is granted, a first message, configured to indicate the setting data, sent by the V-Central NF; and
sending a second message configured to indicate the setting data to the H-Consumer NF.

2. The method according to claim 1, further comprising:
receiving the first request message sent by the H-Consumer NF, wherein the first request message comprises at least one of: a UE identifier corresponding to the setting data, or a data processor identifier of the setting data.

3. The method according to claim 2, wherein sending the second request message to the Central Network Function in the Visited Public Land Mobile Network V-Central NF according to the first request message of the Consumer Network Function in the Home Public Land Mobile Network H-Consumer NF comprises:
determining, after receiving the first request message, whether the home public land mobile network HPLMN is allowed to acquire data from the visited public land mobile network VPLMN according to a local operator policy and/or a regulatory policy of the HPLMN; and
sending, when the HPLMN is allowed to acquire the data from the VPLMN, the second request message to the V-Central NF.

4. The method according to any one of claims 1 to 3, further comprising:
sending, when receiving a first notification message sent by the V-Central NF, a second notification message to the H-Consumer NF, wherein the first notification message is configured to notify that the user consent is modified or revoked, and the second notification message is configured to notify the H-Consumer NF to stop processing the setting data and delete the setting data acquired.

5. The method according to any one of claims 1 to 3, wherein the first network element of the Visited Public Land Mobile Network is one of:
the V-Central NF;
a Network Data Analytics Function in the Visited Public Land Mobile Network V-NWDAF; or
a Network Function in the Visited Public Land Mobile Network V-NF.

6. The method according to any one of claims 1 to 3, wherein the setting data comprises user data or analytics information.

7. A method for sending data in a roaming scenario, performed by a Central Network Function in a Visited Public Land Mobile Network V-Central NF, comprising:
receiving a second request message sent by an H-NWDAF, wherein the second request message is configured to request setting data; and
sending, after a first network element of the Visited Public Land Mobile Network checks that a user consent is granted, a first message configured to indicate the setting data to the H-NWDAF.

8. The method according to claim 7, wherein sending the first message configured to indicate the setting data to the H-NWDAF comprises:
sending, when the setting data is analytics information, a first subscription message to a V-NWDAF;
receiving a third message, configured to indicate the analytics information, sent by the V-NWDAF; and
sending the first message configured to indicate the analytics information to the H-NWDAF.

9. The method according to claim 7, wherein sending the first message configured to indicate the setting data to the H-NWDAF comprises:
sending, when the setting data is user data, a second subscription message to a V-NF;
receiving a fourth message, configured to indicate the user data, sent by the V-NF; and
sending the first message configured to indicate the user data to the H-NWDAF.

10. The method according to claim 7, wherein the first network element is one of:
the V-Central NF;
a V-NWDAF; or
a V-NF.

11. The method according to claim 7 or 10, wherein when the first network element is the V-Central NF, the method further comprises:
performing checking based on the user consent.

12. The method according to claim 11, wherein performing the checking based on the user consent comprises:
determining, according the user consent and a local operator policy and/or a regulatory policy of the VPLMN, whether provision of the setting data to an HPLMN is allowed; and
determining, when the provision of the setting data to the HPLMN is allowed, that the user consent is granted.

13. The method according to claim 7, further comprising:
sending, when the user consent is modified or revoked, a first notification message to the H-NWDAF.

14. The method according to claim 7, further comprising one of:
sending, when the setting data is analytics information and the user consent is modified or revoked, a first notification message to a V-NWDAF; or
sending, when the setting data is user data and the user consent is modified or revoked, a first notification message to a V-NF.

15. The method according to any one of claims 7 to 14, wherein the V-Central NF is one of:
a V-NWDAF;
a data collection coordination function DCCF;
a network exposure function NEF; or
a gateway exposure function GEF.

16. A method for sending data in a roaming scenario, performed by a Network Data Analytics Function in a Visited Public Land Mobile Network V-NWDAF, comprising:
receiving a first subscription message sent by a V-Central NF; and
sending a third message configured to indicate analytics information to the V-Central NF.

17. The method according to claim 16, further comprising:
performing, in response to the V-NWDAF serving as a first network element, checking based on user consent.

18. The method according to claim 17, wherein performing the checking based on the user consent comprises:
determining, according to the user consent and a local operator policy and/or a regulatory policy of the VPLMN, whether provision of the analytics information to an HPLMN is allowed; and
determining, when the provision of the analytics information to the HPLMN is allowed, that the user consent is granted.

19. The method according to claim 16, further comprising:
stopping, when receiving a first notification message sent by the V-Central NF, generating the analysis message, wherein the first notification message is configured to notify that user consent is modified or revoked.

20. A method for sending data in a roaming scenario, performed by a Network Function in a Visited Public Land Mobile Network V-NF, comprising:
receiving a second subscription message sent by a V-Central NF; and
sending a fourth message configured to indicate user data to the V-Central NF.

21. The method according to claim 20, further comprising:
performing, in response to the V-NF serving as a first network element, checking based on user consent.

22. The method according to claim 21, wherein performing the checking based on the user consent comprises:
determining, according the user consent and a local operator policy and/or a regulatory policy of the VPLMN, whether provision of the user data to an HPLMN is allowed; and
determining, when the provision of the user data to the HPLMN is allowed, that the user consent is granted.

23. The method according to claim 20, further comprising:
stopping, when receiving a first notification message sent by the V-Central NF, generating the user data, wherein the first notification message is configured to notify that user consent is modified or revoked.

24. An apparatus for receiving data in a roaming scenario, configured in a Network Data Analytics Function in a Home Public Land Mobile Network H-NWDAF, comprising:
a transceiver module, configured to send a second request message to a Central Network Function in a Visited Public Land Mobile Network V-Central NF according to a first request message of a Consumer Network Function in the Home Public Land Mobile Network H-Consumer NF, wherein the second request message is configured to request setting data;
wherein the transceiver module is further configured to receive a first message configured to indicate the setting data sent by the V-Central NF after a first network element of the Visited Public Land Mobile Network check that user consent is granted; and
the transceiver module is further configured to send a second message configured to indicate the setting data to the H-Consumer NF.

25. An apparatus for sending data in a roaming scenario, configured in a Central Network Function in a Visited Public Land Mobile Network V-Central NF, comprising:
a transceiver module, configured to receive a second request message sent by an H-NWDAF, wherein the second request message is configured to request setting data;
wherein the transceiver module is further configured to send a first message configured to indicate the setting data to the H-NWDAF after a first network element of the Visited Public Land Mobile Network checks that user consent is granted.

26. An apparatus for sending data in a roaming scenario, configured in a Network Data Analytics Function in a Visited Public Land Mobile Network V-NWDAF, comprising:
a transceiver module, configured to receive a first subscription message sent by a V-Central NF;
wherein the transceiver module is further configured to send a third message configured to indicate analytics information to the V-Central NF.

27. An apparatus for sending data in a roaming scenario, configured to be performed by a Network Function in a Visited Public Land Mobile Network V-NF, comprising:
a transceiver module, configured to receive a second subscription message sent by a V-Central NF;
wherein the transceiver module is further configured to send a fourth message configured to indicate user data to the V-Central NF.

28. A communication device comprising a processor and a memory, wherein
the memory is configured to store a computer program;
the processor is configured to execute the computer program to perform the method according to any of claims 1-6, any of claims 7-15, any of claims 16-19, or any of claims 20-23.

29. A computer-readable storage medium, the computer-readable storage medium storing instructions, wherein when the instructions are invoked and executed on a computer, the computer performs the method according to any of claims 1-6, any of claims 7-15, any of claims 16-19, or any of claims 20-23.
